# NEUE EUROPÄISCHE PATENTSCHRIFT

(11) **EP 0 643 243 B2**
(45) Veröffentlichungstag und Bekanntmachung des Hinweises auf die Entscheidung über den Einspruch: **12.03.2003**
(45) Hinweis auf die Patenterteilung: 04.03.1998
(21) Anmeldenummer: 94111609.7
(22) Anmeldetag: 26.07.1994
(51) Int. Cl.: F16J 15/32

(54) **Hydrodynamische Hochdruck-Rotordichtung**
Hydrodynamic high pressure seal
Joint d'étanchéité haute pression à effet hydrodynamique

(30) Priorität: 09.09.1993 DE 4330524
(43) Veröffentlichungstag der Anmeldung: 15.03.1995
(73) Patentinhaber: Parker Hannifin GmbH, 33659 Bielefeld (DE)
(72) Erfinder: Becker, Markus, D-74321 Bietigheim-Bissingen (DE)
(74) Vertreter: Wolff, Michael, Dipl.-Phys.

(56) Entgegenhaltungen:
- DE-A- 1 954 972
- DE-A- 2 348 739
- DE-C- 3 425 431

## Beschreibung

Die Erfindung betrifft eine Rotordichtung gemäß Oberbegriff des Anspruches 1, deren Gleitring radial außen oder innen dynamisch abdichten und einfach- oder doppeltwirkend sein kann. Als Betriebsmedium, gegen das gedichtet werden soll, kommt in erster Linie eine Hydraulikflüssigkeit in Frage.

Ein gewellter periodischer Verlauf zweier kreisförmiger Dichtkanten (151) der kreiszylindrischen Dichtfläche des Gleitringes (1) der "Wellendichtung" gemäß DE-C-34.25.431 (Fig. 2) ergibt sich erst bei deren Druckbetrieb mittels eines oberflächlich gewellten Stützringes (3) axial neben Elastomer-Ring (2) und Gleitring (1), die zusammen in einer Radialebene wirksam sind.
Bei einer aus der DE-A-2.348.739 (Fig. 2 und 5) bekannten Drehdurchführungsdichtung gemäß Oberbegriff des Anspruches 1 haben dagegen schon in der Abwicklung des Gleitringes (30) zwei Dichtkanten seiner Dichtfläche einen ganz welligen, also stetigen, nicht-periodischen Verlauf, um zu erreichen, daß das axial anstehende Betriebsmedium von der einen und/oder anderen Dichtkante in den Dichtspalt zwischen der Dichtfläche des Gleitringes und der radial gegenüberliegenden Rotorfläche eingeschleppt wird und dort die gewünschte Schmierung bewirkt, anstatt das Schmiermittel während der Rotation zu verbrauchen oder zur Niederdruckseite hin axial zu verdrängen so daß Reibung entsteht, die zu unerwünschter Erwärmung und Verschleiß führt. Ausgehend von dieser bekannten Drehdurchführungsdichtung liegt der Erfindung die Aufgabe zugrunde, bei Rotordichtungen gemäß Oberbegriff des Anspruches 1 auf andere, möglichst bessere, Weise stets für eine hinreichende Schmierung durch das Betriebsmedium zu sorgen.
Diese Aufgabe ist erfindungsgemäß mittels der kennzeichnenden Merkmale des Anspruches 1 gelöst, wobei die beiden Ringe ein Stück bilden können. Da in der Abwicklung des Gleitringes mindestens eine der zwei Dichtkanten einen Zick-Zack-förmigen, periodischen Verlauf hat, der aus geradlinigen Abschnitten besteht, ergibt sich eine einfache aber wirksame Randgeometrie der Dichtfläche, die stets vom Betriebsmedium geschmiert ist.
Vorzugsweise haben beide Dichtkanten einen Zick-Zack-förmigen, periodischen Verlauf; dadurch ist die axiale Breite der Dichtfläche des Gleitringes über dessen Umfang konstant wie im Falle der genannten bekannten Drehdurchführungsdichtungen.

Falls die Zick-Zack-förmigen Abschnitte der Dichtfläche gleich lang sind und/oder paarweise gleiche stumpfe Winkel zwischen zwei aufeinanderfolgenden Dichtflächenabschnitten der Gleitring-Abwicklung bilden ist die Dichtfläche regelmäßig gestaltet, zum Beispiel doppelsägezahnförmig.
Falls die axial inneren Tangenten an die eine bzw. andere Dichtkante zusammenfallen oder einen negativen axialen Abstand voneinander aufweisen, so daß die abgewickelte Dichtfläche längs der Mittellinie der beiden Tangenten unterbrochen erscheint, ist gewährleistet, daß an jeder axialen Stelle der Dichtfläche in deren Umfangsrichtung periodisch zwei aufeinanderfolgende Dichtkanten zweier verschiedener aneinandergefügter Flächenabschnitte vorhanden sind und je nach Rotationsrichtung die eine oder andere dieser Dichtkanten Betriebsmedium in den Dichtspalt einschleppt und diesen dadurch schmiert.

Im Folgenden ist die Erfindung anhand einer durch die Zeichnung beispielhaft dargestellten bevorzugten Ausführungsform der erfindungsgemäßen Rotordichtung im einzelnen erläutert.
Es zeigt:

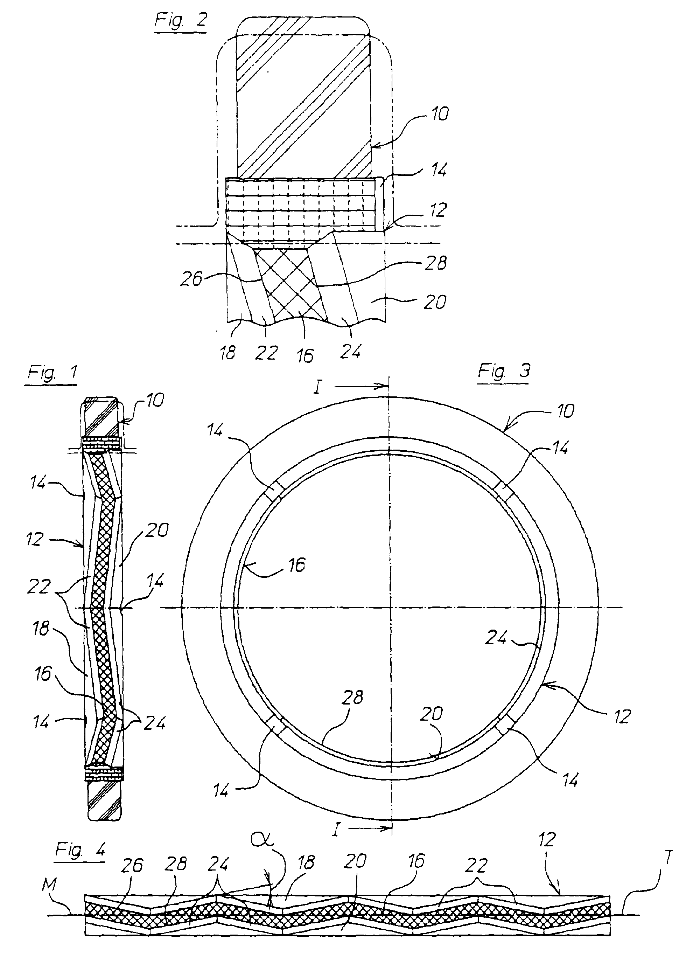

- Fig. 1: Einen zentralen Querschnitt nach der Linie I-I in Fig. 3 durch die Ausführungsform
- Fig. 2: einen vergrößerten Ausschnitt von Fig. 1
- Fig. 3: eine Breitseitenansicht der Ausführungsform
- Fig. 4: eine Innenansicht der Abwicklung des Gleitringes der Ausführungsform

Im Ausführungsbeispiel besteht die erfindungsgemäße hydrodynamische Hochdruck-Rotordichtung für Hydraulikflüssigkeiten aus einem radial äußeren Elastomer-Ring 10 als statischem Dichtungselement mit Rechteckprofil (oder in Form eines 0-Ringes) und aus einem radial inneren Gleitring als dynamischem Dichtungselement, das von dem ihn umgebenden Ring 10 radial nach innen gegen den hinzuzudenkenden Rotor vorgespannt wird. Dabei ist der Elastomer-Ring 10 selbst radial nach außen gegen einen hinzuzudenkenden Nutgrund eines Einbauraumes der innendichtenden Rotordichtung vorgespannt. Der Gleitring 12, der an seinen beiden einander abgewandten axialen Stirnflächen je vier gleichmäßig auf den Umfang verteilte Druckbe-/-entlastungsnuten 14 aufweist, besitzt eine axial schmalere kreiszylindrische, also in Umfangsrichtung durchgehende Dichtfläche 16 mit konstanter axialer Breite, die geringer ist als der axiale Stirnflächenabstand, wobei die Dichtfläche an keiner Umfangsstelle über eine der beiden Stirnflächen axial hervortritt.
Die Dichtfläche 16 erhebt sich radial nach innen in konstanter radialer Höhe über zwei seitliche Grundflächen 18 und 20 gleichen Durchmessers, die axial nach innen über zwei umlaufende Flanken 22 bzw. 24 an die Dichtfläche 16 anschließen.

Da sowohl die beiden Flanken 22 und 24 als auch die Dichtfläche 16 selbst einen Zick-Zack-förmigen periodischen Verlauf nehmen, ergeben sich aus dem Anschluß der beiden Flanken an die Dichtfläche zwei Zick-Zack-förmige Dichtkanten 26 und 28.
Aus der Innenansicht der Abwicklung des Gleitringes 12 ist zu ersehen, daß die einzelnen Abschnitte der Dichtfläche 16 gleich lang sind und unter gleichem stumpfem Winkel 180°-2α aneinandergefügt sind, wobei die Mittellinie M der Abwicklung und die beiden Tangenten T an die Dichtkante 26 bzw. 28 identisch sind

## Patentansprüche

1. Hydrodynamische Hochdruck-Rotordichtung für flüssige Betriebsmedien, mit einem Elastomer-Ring (10) als statischem Dichtungselement zum radialen Vorspannen eines gegebenenfalls elastomeren Gleitringes (12) als dynamisches Dichtungselement, das eine radial wirkende Dichtfläche (16) an einem Umfang des Gleitringes (12) mit zwei ringförmigen Dichtkanten (26, 28) zur axialen Begrenzung der Dichtfläche (16) aufweist, wobei die Dichtfläche (16) wenigstens eine axiale Dichtkanten-Auslenkung aus einer virtuellen Radialebene aufweist, dergestalt, daß verschiedene, in Umfangsrichtung der Dichtfäche (16) zusammenhängende Abschnitte derselben an der einen und/oder der anderen Dichtkante (26, 28) einen verschiedenen Verlauf der auf diese Flächenabschnitte entfallenden Kantenabschnitte zeigen, **dadurch gekennzeichnet, daß** in der Abwicklung des Gleitringes (12) mindestens eine der zwei Dichtkanten (26, 28) einen Zick-Zack-förmigen, periodischen Verlauf hat, insbesondere beide Dichtkanten, wobei dieser Zick-Zack-förmige Verlauf der abgewickelten Dichtkante (26, 28) aus geradlinigen Abschnitten besteht.

2. Rotordichtung nach Anspruch 1, bei deren Gleitring (12) beide Dichtkanten (26, 28) einen Zick-Zack-förmigen, periodischen Verlauf haben und die axiale Breite der Dichtfläche (16) konstant ist.

3. Rotordichtung nach Anspruch 1 oder 2, **dadurch gekennzeichnet, daß** die Zick-Zack-förmigen Abschnitte der Dichtfläche (16) gleich lang sind und/oder paarweise gleiche stumpfe Winkel (180° - 2α) zwischen zwei aufeinanderfolgenden Dichtflächenabschnitten der Gleitringabwicklung bilden.

4. Rotordichtung nach Anspruch 3, **dadurch gekennzeichnet, daß** die axial inneren Tangenten (T) an die eine bzw. andere Dichtkante (26/28) zusammenfallen (Fig.4) oder einen negativen axialen Abstand voneinander aufweisen, so daß die abgewikkelte Dichtfläche (16) längs der Mittellinie (M) der beiden Tangenten (T) unterbrochen erscheint.

5. Rotordichtung nach einem der Ansprüche 1 bis 4, **dadurch gekennzeichnet, daß** die beiden Ringe (10 und 12) einstückig ausgebildet sind.

6. Rotordichtung nach einem der Ansprüche 1 bis 5, **dadurch gekennzeichnet, daß** der Elastomer-Ring (10) ein Rechteckprofil aufweist.

## Claims

1. Hydrodynamic high-pressure seal for liquid operating media with an elastomer ring (10) as static sealing element for the radial prestress of a possibly elastomer slide ring (12) as dynamic sealing element which is provided with a radially acting sealing surface (16) at the circumference of the slide ring (12) with two ring-shaped sealing edges (26, 28) for axial limitation of the sealing surface (16) whereby said sealing surface (16) has at least one axial sealing edge deviation from a virtual radial plane in such a way that different sections of said sealing surface (16) connected in direction of the circumference of the sealing surface, show at one and/or the other sealing edge (26, 28) a different course of the edge sections pertaining to said surface sections , **characterized in that** with respect to the developed view of the slide ring (12) at least one of the two sealing edges (26, 28), preferrably both sealing edges, have a zigzag-shaped periodic course, whereby said zigzag-shaped course of the laid-out sealing edge (26, 28) consists of straight-lined sections.

2. High-pressure seal as set forth in claim 1 wherein the two sealing edges (26, 28) of its slide ring (12) have a zigzag-shaped periodic course, and the axial width of the sealing surface (16) is constant.

3. High-pressure seal according to claims 1 or 2 **characterized in that** the zigzag-shaped sections of the sealing surface (16) are of equal length and/or form pairwise equal obtuse angles (180° - 2 ∝) between two successive sealing surface sections of the developed view of the slide ring.

4. High-pressure seal according to claim 3, **characterized in that** the axial inner tangents (T) to one or the other sealing edges (26/28) coincide (Fig. 4) or show a negative axial distance from each other so that the laid-out sealing surface (16) along the middle line (M) of the two tangents (T) seems to be interrupted.

5. High-pressure seal according to one of the claims 1 to 4 **characterized in that** both rings (10 and 12) are formed in one piece.

6. High-pressure seal according to one of the claims 1 to 5 **characterized in that** the elastomer ring (10) has a rectangular profile.

## Revendications

1. Joint d'étanchéité haute pression à effet hydrodynamique pour des fluides hydrauliques, avec une bague d'élastomère (10) comme élément d'étanchéité statique pour la précontrainte radiale d'une bague de glissement (12), le cas échéant en élastomère, comme élément d'étanchéité dynamique, possédant, sur une circonférence de la bague de glissement (12), une surface d'étanchéité (16) à effet radial avec deux arêtes circulaires d'étanchéité (26, 28) pour la délimitation axiale de la surface d'étanchéité (16), configuration dans laquelle la surface d'étanchéité (16) montre au moins une déviation axiale de l'arête d'étanchéité sortant d'un plan radial virtuel de façon que différentes parties de ladite surface contiguës en direction circonférentielle de la surface d'étanchéité montrent, à l'une et/ou à l'autre des arêtes d'étanchéité (26, 28), un tracé différent des parties d'arête appartenant à ces parties de surface, **caractérisé en ce que** lors du développement de la bague de glissement (12) au moins l'une des deux arêtes d'étanchéité (26, 28), en particulier les deux arêtes d'étanchéité, a un tracé en forme de zigzag périodique, ce tracé en forme de zigzag de l'arête d'étanchéité développée consistant en des parties droites.

2. Joint d'étanchéité suivant la revendication 1 dont les deux arêtes d'étanchéité (26, 28) de la bague de glissement (12) ont un tracé en forme de zigzag périodique et dont la largeur axiale de la surface d'étanchéité (16) est constante.

3. Joint d'étanchéité suivant la revendication 1 ou 2 **caractérisé en ce que** les parties en forme de zigzag de la surface d'étanchéité (16) ont la même longueur et/ou forment, par paires, les mêmes angles obtus (180° - 2α) entre deux parties consécutives de surface d'étanchéité du développement de la bague de glissement.

4. Joint d'étanchéité suivant la revendication 3 **caractérisé en ce que** les tangentes (T) axiales intérieures à l'une ou l'autre des arêtes d'étanchéité (26/28) coïncident si bien que la surface d'étanchéité développée (16) semble être interrompue le long de la ligne de milieu (M) des deux tangentes (T).

5. Joint d'étanchéité suivant l'une des revendications 1 à 4, **caractérisé en ce que** les deux bagues (10 et 12) sont d'une seule pièce.

6. Joint d'étanchéité suivant l'une des revendications 1 à 5, **caractérisé en ce que** la bague d'élastomère (10) a un profil rectangulaire.
